# FASCICULE DE BREVET EUROPEEN

(11) **EP 3 977 573 B1**
(45) Date de publication et mention de la délivrance du brevet: **20.05.2026**
(21) Numéro de dépôt: 20733200.8
(22) Date de dépôt: 27.05.2020
(51) Int. Cl.: H01S 3/067, G02F 1/11

(54) **ARCHITECTURES DE DISPOSITIF OPTIQUE ET D'AMPLIFICATEUR OPTIQUE FIBRE EN DOUBLE PASSAGE**
FASEROPTISCHER DOPPELPASS-VERSTÄRKER UND ARCHITEKTUREN OPTISCHER VORRICHTUNGEN
DOUBLE-PASS FIBRE-OPTIC AMPLIFER AND OPTICAL-DEVICE ARCHITECTURES

(30) Priorité: 28.05.2019 FR 1905673
(43) Date de publication de la demande: 06.04.2022
(73) Titulaire: Leosphere, 75008 Paris (FR)
(72) Inventeur: CARIOU, Jean-Pierre, 91440 Bures-sur-Yvette (FR); GRASSER, Régis, 45160 Olivet (FR); PUREUR, Vincent, 91530 Saint-Chéron (FR)
(74) Mandataire: IPAZ
(86) Numéro de dépôt international: PCT/EP2020/064725
(87) Numéro de publication internationale: WO 2020/239848

(56) Documents cités:
- EP-A2- 2 302 746
- FR-A1- 3 014 604
- US-A- 5 574 739
- US-A- 5 835 512
- EM4: "Acousto Optic Modulator", 2 March 2011 (2011-03-02), XP055721017, Retrieved from the Internet <URL:https://www.symphotony.com/wp-content/uploads/EM4_1550_AOM_40ns.pdf> [retrieved on 20200807]
- LIGHTCOMM: "Fiber Coupled Acousto-Optic Modulator", 1 January 2007 (2007-01-01), XP055721151, Retrieved from the Internet <URL:http://www.lightcomm.com/Common/Plugin/Ueditor/php/upload/20170602/1496453580331.pdf> [retrieved on 20200810]

## Description

### Domaine technique

La présente invention se rapporte à la modulation et à la génération de signaux optiques impulsionnels. La présente invention se rapporte également à l'amplification de faisceaux optiques. La présente invention vise, en particulier, à générer des signaux impulsionnels à haute cadence, haute puissance et faible largeur spectrale.

La présente invention concerne un modulateur acousto-optique, un dispositif optique et un amplificateur optique fibré en double passage.

### Etat de la technique antérieure

On connait l'utilisation de Modulateurs Acousto-Optiques (MAO) de l'état de la technique antérieure pour moduler un signal optique et pour générer des impulsions de signal, par example FR 3 014 604. Les modulateurs acousto-optiques sont utilisés pour, entre autres, moduler un signal en fréquence et/ou pour moduler l'intensité afin, entre autre, de générer des impulsions de signal. Un inconvénient inhérent aux MAOs de l'état de l'art réside dans leurs pertes par réflexion correspondant au signal optique parasite réfléchi par les MAO se propageant en sens inverse à la lumière incidente. Ces pertes par réflexion réduisent les performances des architectures optiques dans lesquelles les MAO sont intégrés et impliquent d'adapter le fonctionnement et la configuration des architectures pour contrer l'effet de ces pertes par réflexion.

Un type d'architecture de l'état de la technique dans laquelle les MAOs sont intégrés et dont les pertes par réflexion limitent les performances sont les amplificateurs optique fibrés en double passage (AODP) comprenant un MAO et un amplificateur optique à fibre dopée (type EDFA). Les pertes par réflexion des MAOs provoquent une distorsion de le forme temporelle des signaux émis par le AOPD en générant des surmodulations instables et nécessitent, pour s'en prévenir, de complexifier ce type d'architecture en rajoutant des composants, par exemple un ou des MAOs supplémentaires, et de brider les performances de certains composants, par exemple diminuer le gain du ou des EDFAs.

Un but de l'invention est notamment :
- d'atténuer les surmodulations dans le signal temporel générées par les pertes par réflexion dans les AODPs, et/ou
- d'atténuer les pertes par réflexion des MAOs, et/ou
- d'améliorer les performances des AODP comprenant au moins un MAO.

### Présentation de l'invention

A cet effet, il est proposé un dispositif optique tel que définit dans les revendications 1 à 10.

### Description des figures

D'autres avantages et particularités de l'invention apparaîtront à la lecture de la description détaillée de mises en œuvre et de modes de réalisation nullement limitatifs, et des dessins annexés suivants :
[Fig. 1] la figure 1 illustre une représentation schématique d'une vue de côté d'un MAO de l'état de l'art,
[Fig. 2] la figure 2 illustre une représentation schématique des pertes par réflexion d'un MAO de l'état de l'art en vue de côté,
[Fig. 3] la figure 3 illustre une représentation schématique d'une vue de côté d'un MAO selon un premier mode de réalisation de la première variante de l'invention,
[Fig. 4] la figure 4 illustre une représentation schématique d'une vue de dessous d'un MAO selon un deuxième mode de réalisation de la deuxième variante de l'invention,
[Fig. 5] la figure 5 illustre une représentation schématique d'une vue de côté d'un MAO selon un troisième mode de réalisation de la troisième variante de l'invention,
[Fig. 6] la figure 6 illustre une représentation schématique d'un AODP de l'état de l'art,
[Fig. 7] la figure 7 illustre une simulation d'une impulsion, comprenant des surmodulations usuelles, obtenue par un AODP de l'état de l'art,
[Fig. 8] la figure 8 illustre une simulation d'une impulsion optique obtenue par un AODP de l'état de l'art comprenant la première amélioration selon l'invention,
[Fig. 9] la figure 9 illustre une simulation d'une impulsion optique obtenue par un AODP de l'état de l'art comprenant la troisième amélioration selon l'invention,
[Fig. 10] la figure 10 illustre une simulation d'une impulsion optique obtenue par un AODP de l'état de l'art comprenant la troisième amélioration selon l'invention,
[Fig. 11] la figure 11 illustre une simulation d'une impulsion optique obtenue par un AODP de l'état de l'art comprenant les première et troisième améliorations selon l'invention,
[Fig. 12] la figure 12 illustre une simulation d'une impulsion optique obtenue par un AODP de l'état de l'art comprenant les première et quatrième améliorations selon l'invention.

### Description des modes de réalisation

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

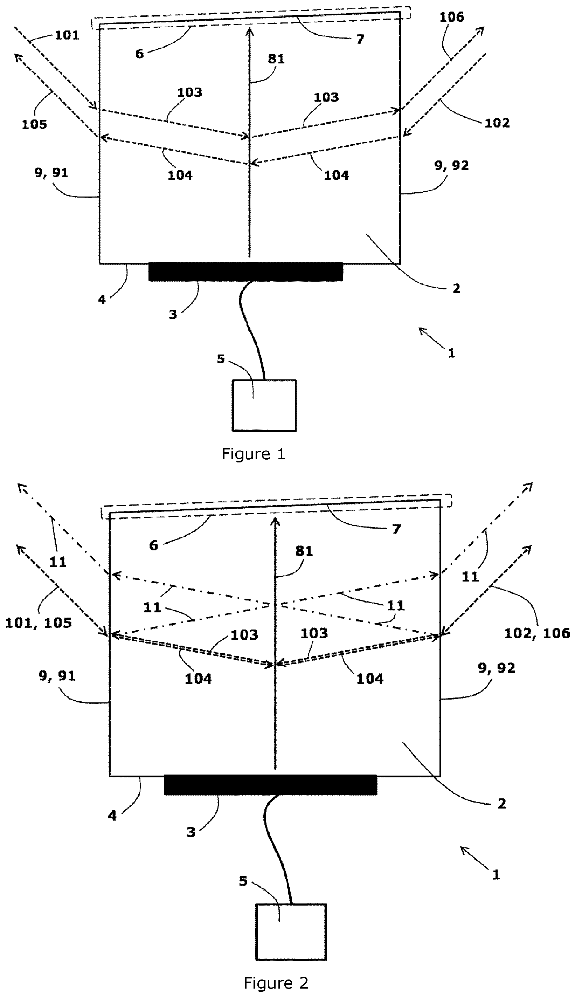

La FIGURE 1 illustre un Modulateur Acousto-Optique (MAO) de l'état de l'art selon un agencement dit classique. Un MAO 1 comprend un cristal 2 composé d'un matériau cristallin ou amorphe, par exemple du verre ou du quartz. Il comprend également un oscillateur piézo-électrique 3 en contact avec une face du cristal 4, dite face d'injection 4. Un signal alternatif est émis à une fréquence donnée par un émetteur 5. Ce signal alternatif actionne l'oscillateur piézo-électrique 3 qui vibre à une fréquence qui est fonction de la fréquence donnée du signal alternatif. Les vibrations de l'oscillateur piézo-électrique génèrent une onde acoustique se propageant dans le cristal 2. Le MAO 1 comprend également un absorbeur acoustique 6 agencé sur une face 7 du cristal, dite face d'absorption 7. L'absorbeur 6 absorbe l'onde acoustique après qu'elle se soit propagée dans le cristal 2 depuis la face d'injection 4 jusqu'à la face d'absorption 7. La fonction de l'absorbeur est de réduire la puissance de l'onde acoustique de réfléchir l'onde acoustique dans le cristal et ainsi créer une modulation d'intensité supplémentaire parasite d'un faisceau optique se propageant dans le cristal. Les MAO 1 comprennent deux faces opposées 9, 91 et 9, 92, dites faces d'entrée/sortie 9, 91, 92, parallèles entre elles. Les faces d'entrée/sortie 9, 91, 92 sont traversées par des faisceaux destinés à entrer 101, 102 dans le cristal 2, dits faisceaux entrants, et des faisceaux destinés à sortir 103, 104 du cristal 2. Les faces d'entrée/sortie 9, 91, 92 sont agencées de sorte que les faisceaux entrants 101, 102, après être entrés dans le cristal 2, se propagent dans le cristal 2 et deviennent les faisceaux destinés à sortir 103, 104 du cristal 2. Les faces d'entrée/sortie 9, 91, 92 sont agencées de sorte que les faisceaux destinés sortir 103, 104 du cristal 2, après avoir traversés les faces d'entrée/sortie 9, 91, 92, deviennent des faisceaux sortants 105, 106 se propageant dans la même direction que les faisceaux destinés à entrer 101, 102 dans le cristal 2. le plan de propagation des faisceaux incident et réfléchi par l'onde acoustique à l'intérieur du cristal, dit plan de propagation. A l'intérieur du cristal, le faisceau entrant par la face d'entrée et le faisceau réfléchi par l'onde acoustique et se dirigeant vers la face de sortie forment un angle entre eux et ont un point commun au niveau de l'onde acoustique. Ces deux faisceaux forment donc un plan.

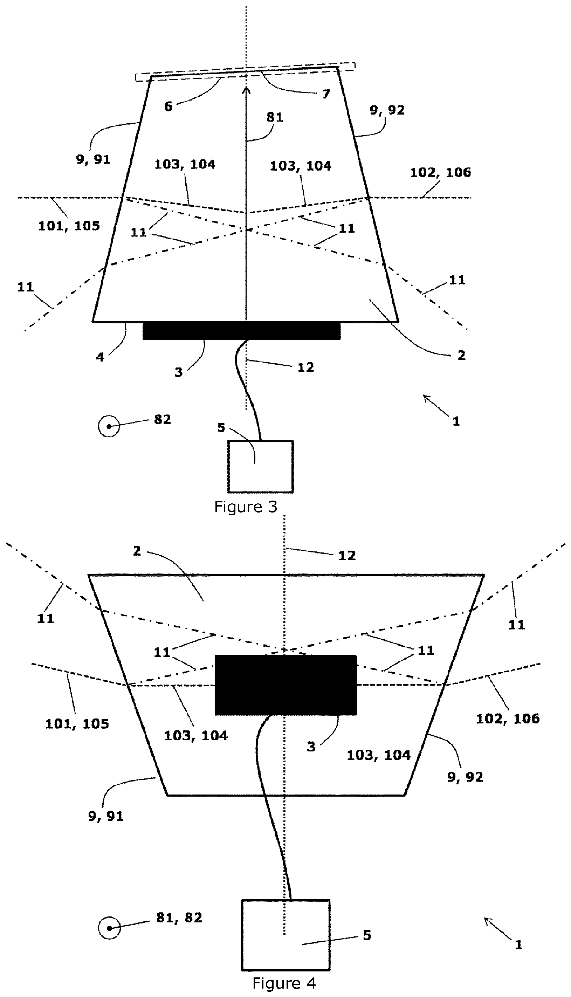

Les MAO 1 de l'état de l'art provoquent l'apparition de faisceaux parasites 11, aussi appelés pertes par réflexion, lorsqu'ils sont en fonctionnement. Les inventeurs ont observés que lorsque les faces d'entrée/sortie 9, 91, 92 ne sont pas parallèles entre elles, une diminution considérable de l'apparition de tels faisceaux parasites 11 est observée. Aussi, selon l'invention, afin de limiter, voire de supprimer, l'apparition de ces faisceaux parasites 11, il est proposé, en référence aux Figures 3 et 4, un modulateur acousto-optique 1 dans lequel les deux faces opposées d'entrée/sortie 9, 91, 92 du cristal 2 forment un angle non nul entre elles.

En référence à la Figure 2, les inventeurs ont émis l'hypothèse que ces faisceaux parasites 11 naissent de la réflexion, dans le cristal 2, d'une partie des faisceaux destinés à sortir 103, 104 du cristal 2 sur les faces d'entrée/sortie 9, 91, 92. Ces faisceaux parasites 11, c'est-à-dire la partie réfléchie 11 des faisceaux destinés à sortir 103, 104 du cristal 2, ne sont pas modulés par le MAO 1 et sortent du cristal 2 selon une direction parallèle à la direction des faisceaux sortants 105, 106 et des faisceaux destinés à entrer 101, 102 dans le cristal 2.

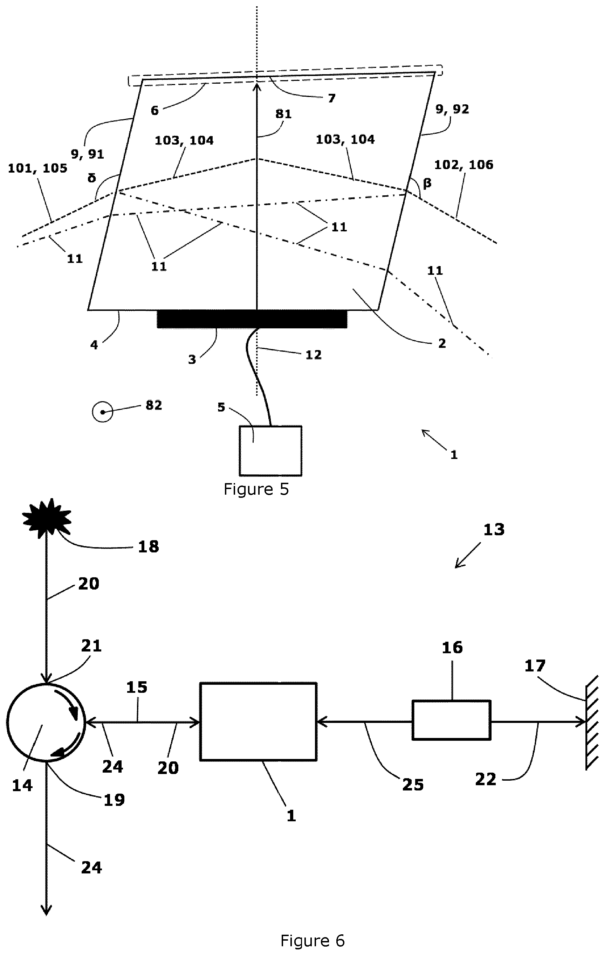

En référence aux Figures 3 et 5, les MAOs 1 selon l'invention sont agencés pour que les faisceaux parasites 11 ne soient pas couplés avec les faisceaux sortants 105, 106. Le cristal 2 est agencé de sorte que les faisceaux parasites, après être sortis du cristal 2 par l'une des faces d'entrée/sortie 9, 91, 92, présente une direction différente de la direction des faisceaux sortants 105, 106.

En référence aux Figures 3 et 4, l'angle formé entre les deux faces opposées d'entrée/sortie 9, 91, 92, ou l'angle formé par les faces avec la direction de propagation, a pour effet que les faisceaux parasites 11 se propagent dans le cristal 2 selon une direction différente de celle des faisceaux destinés à sortir 103, 104 du cristal 2 et sortent du cristal 2 selon une direction différente de celle des faisceaux sortants 105, 106 et des faisceaux destinés à entrer 101, 102 dans le cristal 2. La direction de propagation est perpendiculaire à l'oscillateur piézo-électrique 3. Une droite d'intersection (non représentée) des faces opposées d'entrée/sortie 9, 91, 92 et la direction de propagation 81 de l'onde acoustique dans le cristal 2 sont comprise dans un plan 12 s'étendant entre la face d'injection 4 et la face d'absorption 7. L'angle formé entre la face d'entrée 9, 91 et la direction de propagation est identique à l'angle que forme la face de sortie 9, 92 et la direction de propagation. En outre, l'angle que forme la face d'entrée 9, 91 avec le plan 12 est identique à l'angle que forme la face de sortie 9, 92 avec le plan 12.

En référence aux Figures 3 à 5, il est utilisé un cristal 2 AMTIR excité avec une onde acoustique de 40MHz et traversé par des faisceaux 101, 102, 103, 104, 105, 106 de longueur d'onde 1,54µm dans le vide.

En référence aux Figures 3 et 4, l'angle formé entrer la face d'entrée 9, 91 et la face de sortie 9, 92 est compris entre 0,5° à 5°, l'angle est typiquement de l'ordre de 1°. Cela permet d'obtenir des faisceaux sortants 105, 106 et des faisceaux destinés à entrer 101, 102 parallèles.

En référence à la Figure 3, selon un premier mode de réalisation, les faces d'entrée/sortie 9, 91, 92 du MAO 1 forment un angle entre elles tel que les faisceaux entrants 101, 102 et les faisceaux sortants 105, 106 sont parallèles entre eux et perpendiculaires à la direction de propagation 81 de l'onde acoustique. La direction 82 selon laquelle s'étend la droite d'intersection est perpendiculaire à la direction de propagation 81 de l'onde acoustique. La direction de propagation 81 et la droite d'intersection appartiennent au même plan.

En référence à la Figure 4, selon un deuxième mode de réalisation, la direction 82 selon laquelle s'étend la droite d'intersection est parallèle à la direction de propagation 81 de l'onde acoustique. La direction de propagation et la droite d'intersection sont parallèles.

En référence à la Figure 5, selon un troisième mode de réalisation, les faces d'entrée/sortie 9, 91, 92 du MAO 1 sont parallèles entre elles et forment un angle non nul avec la direction de propagation 12. La direction de propagation 81 et la droite d'intersection ne font ici pas parti d'un même plan mais appartiennent à deux plans distincts.

Selon le troisième mode de réalisation, l'angle β formé entre la face de sortie 9, 92 et les faisceaux 102, 106 la traversant est différent de l'angle δ formé entre la face d'entrée 9, 91 et les faisceaux 101, 105 la traversant.

Il apparait directement et sans ambigüité que chacun des modes de réalisation illustrés aux Figures 1 à 5 représentent un MAO 1 dont les faces d'entrée/sortie 9, 91, 92 sont planes. Les faces d'entrée/sortie 9, 91, 92 du MAO 1 sont comprises dans un plan et s'étendent depuis la face d'injection 4 jusqu'à la face d'absorption 7.

Etant donné que chacune des deux faces d'entrée/sortie 9, 91, 92 sont planes, chacun des modes de réalisation illustrés aux Figures 1 à 5 représentent un MAO 1 comprenant une droite d'intersection unique.

En référence à la Figure 6, il est présenté un amplificateur optique fibré en double passage (AODP) 13 de l'état de l'art. L'AODP 13 comprend un coupleur à séparation de polarisation (PBS) 14, une fibre optique 15, dite fibre amont 15, reliant le PBS 14 à un MAO 1 de l'état de l'art tel que décrit ci-dessus, un amplificateur optique à fibre dopée (EDFA) 16, dont la fibre optique le composant est dite fibre aval 16, reliant le MAO 1 à un miroir de Faraday 17 et un laser 18 émettant un faisceau optique 20 en direction d'une entrée 21 du PBS 14. Le PBS 14 connecte unilatéralement le laser 18 à la fibre amont 15 de sorte que le faisceau optique 20 émis par le laser 18 se propage dans la fibre amont 15 en direction du MAO 1. Le PBS 14 connecte également unilatéralement la fibre amont 15 à une sortie 19 de l'AODP 13 de sorte qu'un faisceau optique retour 24 amplifié deux fois et mis en forme se propageant dans la fibre amont 15 depuis le MAO 1 vers le PBS 14 soit injecté par le PBS 14 vers la sortie 19 de l'AODP 13. Le faisceau optique 20, après être sorti du MAO 1, est amplifié une première fois dans l'EDFA 16 pour constituer un faisceau aller 22 amplifié puis est réfléchi par le miroir de Faraday 17 et amplifié une deuxième fois dans l'EDFA 16 avant de traverser à nouveau le MAO 1.

Selon l'invention, l'AODP 13 comprend une unité de traitement agencée et/ou configurée et/ou programmée pour commander le laser 18, le MAO 1, des moyens de pompage (non représentés) associés à l'AOFD 16 de sorte que le faisceau retour 24 en sortie 19 de l'AODP 13 soit un faisceau optique impulsionnel 24 présentant une fréquence comprise entre 100 Hz et 500 kHz, une puissance comprise entre 10 mW et 500 W, et une largeur temporelle comprise entre 1 nanoseconde (ns) et 1000000 ns.

Les Figures 6 à 11 sont des simulations d'impulsions optiques 24 obtenus en sortie 19 d'architectures otiques ayant pour base l'AODP 13 décrit ci-dessus. Les simulations sont réalisées sur la base du formalisme de Jones et prennent en compte l'évolution de l'état de polarisation et de la puissance transmise en tout point de l'AODP 13.

En référence à la Figure 6, lorsqu'un AODP 13 de l'état de l'art tel que défini ci-dessus (pas de réalisation du MAO 1 afin de réduire les pertes par réflexion et aucune fibre à maintiens de polarisation ni de longueur de fibre supplémentaire) est utilisé pour modifier le faisceau optique 20 émis par le laser 18 sous forme d'impulsions optiques amplifiés 24, le faisceau optique retour 24 en sortie 19 de l'AODP 13 présente des surmodulations 23. Il est à noter que le profil des surmodulations 23 est instable et non prédictible. Ce comportement est particulièrement préjudiciable pour l'utilisation pratique de ce type d'architecture.

Selon une première amélioration de l'AODP 13 de l'état de l'art décrit ci-dessus, la fibre amont 15 est une fibre optique à maintien de polarisation 15 apte à maintenir l'état de polarisation linéaire du faisceau optique 20 émis par le laser 18. Cette amélioration permet que la partie réfléchie 11 par la face d'entrée 9, 91 du cristal 2 du MAO 1 du faisceau amplifié 25 retour, correspondant au faisceau entrant 102, se propageant dans le MAO 1, en provenance de l'AOFD 16 en direction de la fibre amont 15, présente un état de polarisation linéaire normal à celui du faisceau optique 20 émis par le laser 18, correspondant au faisceau entrant 101, se propageant dans le MAO 1, en provenance de la fibre amont 15 en direction de l'AOFD 16. Il est à noter que même si l'intensité de la partie réfléchie 11 est négligeable comparée à l'intensité du faisceau optique 20, le fait qu'elle ait été déjà amplifiée deux fois dans l'AOFD 16 rend son intensité non négligeable lorsqu'elle est couplée au faisceau optique 20 en entrée l'AODP 13.

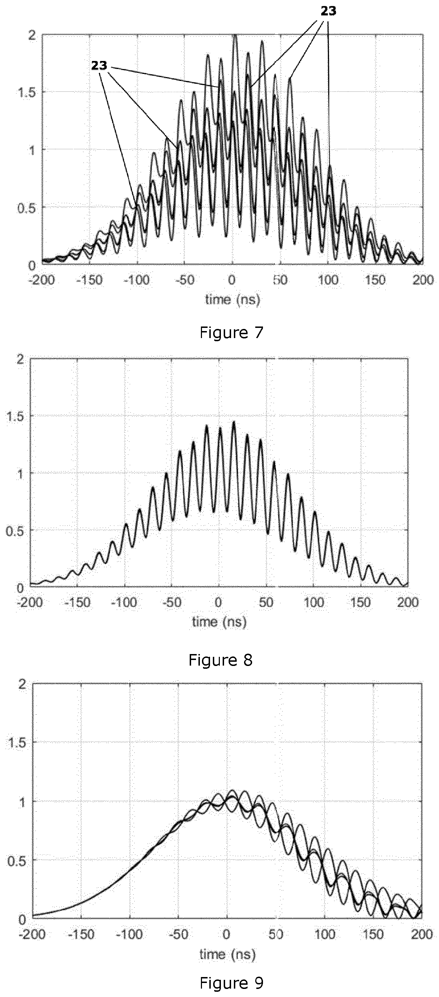

En référence à la Figure 7, il est illustré l'effet de la première amélioration qui annule en partie les interférences entre les faisceaux parasites 11 et le faisceau optique 20 émis par le laser 18 se propageant dans le MAO 1. On remarque que les surmodulations 23 égales à la fréquence de modulation du MAO 1, dite f_{MAO}, ont été annulées. De manière générale, l'ensemble des surmodulations 23 égales à n.f_{MAO}, où n est un nombre impair, sont annulées. Cela correspond au cas où la partie la partie réfléchie 11 par la face d'entrée 9, 91 du cristal 2 du MAO 1 provient d'un faisceau retour 25 amplifié ayant effectué un nombre impair d'aller-retour dans l'AOFD 16. On remarque également que seule la surmodulation 23 égale à deux fois la fréquence de modulation f_{MAO} du MAO 1 est présente. Cela correspond au cas où la partie réfléchie 11 par la face d'entrée 9, 91 du cristal 2 du MAO 1 provient d'un faisceau retour 25 retour ayant effectué deux d'allers-retours dans l'AOFD 16. Les faisceaux retour 25 amplifiés ayant effectués un nombre pair d'aller-retour dans l'AOFD 16 supérieur à 2 sont coupés par la fermeture du MAO 1, le temps de voyage dans la fibre aval 16, correspondant au temps des allersretours, étant supérieur à la durée d'ouverture du MAO 1. Il est bon de noter qu'en plus d'observer une seule surmodulation 23, cette surmodulation 23 présente une grande stabilité. Une telle stabilité peut être utilisée dans le cas où un profil temporel présentant des surmodulations 23 apporte un intérêt pour le contrôle des non linéarités dans les étages d'amplification. En particulier, une réduction de l'effet Brillouin peut être atteinte par cette technique en repoussant son seuil d'apparition par le choix judicieux de l'amplitude de la surmodulation 23.

Selon une deuxième amélioration de l'AODP 13 de l'état de l'art décrit ci-dessus, la fibre aval 16 est également une fibre optique à maintien de polarisation sur tout ou partie de sa longueur. Cette deuxième amélioration permet d'éviter une modification de polarisation des faisceaux optiques 20, 22, 25, 106, 102 se propageant dans la fibre aval 16.

Cette deuxième amélioration permet également d'uniformiser les fibres 15 et 16 autour du MAO de manière à simplifier sa fabrication. Dans ce cas, les collimateurs fibrés utilisés pour injecter et collecter la lumière traversant le MAO 1 peuvent être alignés sans tenir compte du maintien de la polarisation entre les fibres amont 15 et aval 16.

En référence aux Figures 8 et 9, selon une troisième amélioration de l'AODP 13 de l'état de l'art décrit ci-dessus, il est proposé d'augmenter le temps de parcours des faisceaux optiques 20, 22, 25, 106, 102, 11 se propageant dans la fibre aval 16 depuis le MAO 1 jusqu'au miroir de Faraday 17. En pratique, l'augmentation de ce délai consiste à augmenter la longueur de la fibre aval 16.

Tel qu'illustré sur la Figure 8, lorsque l'augmentation de la longueur de la fibre aval 16 est telle que l'augmentation du temps de parcours des faisceaux optiques 20, 22, 106, 102, 11 dans la fibre aval 16 est égal à la moitié de la durée d'ouverture du MAO 1. La majeure partie des surmodulations 23 sont annulées car l'onde parasite 11 réfléchie par le MAO 1 lors du premier passage de l'onde retour 25 arrive au MAO 1 lorsqu'il est fermé après un aller-retour. Néanmoins, la durée de l'impulsion optique amplifié 24 en sortie 19 de l'AODP 13 est également réduite de moitié.

Tel qu'illustré sur la Figure 9, lorsque l'augmentation de la longueur de la fibre aval 16 est telle que l'augmentation du temps de parcours des faisceaux optiques 20, 22, 106, 102, 11 dans la fibre aval 16 est égal à un tiers de la durée d'ouverture du MAO 1. Une partie conséquente des surmodulations 23 sont annulées. Dans ce cas, la durée de l'impulsion optique amplifié 24 en sortie 19 de l'AODP 13 n'est réduite que d'un tiers.

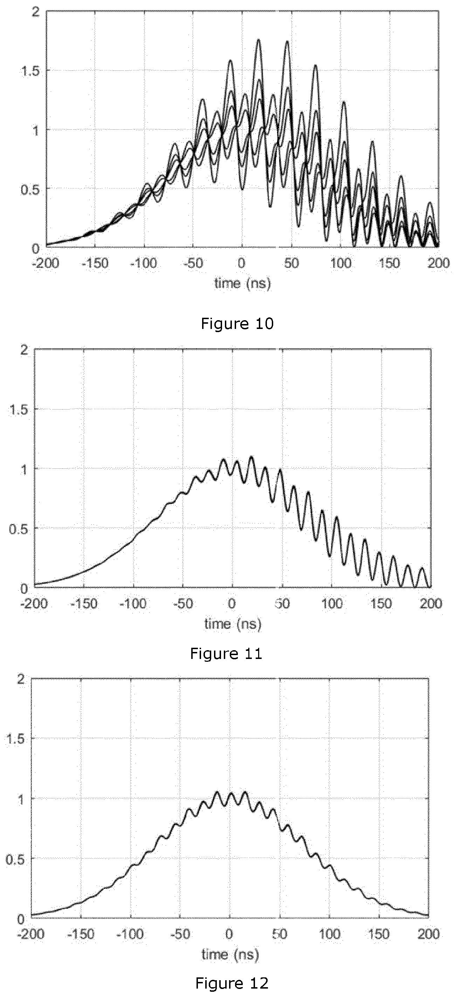

En référence à la Figure 10, il est illustré la simulation des surmodulations 23 engendrées par un AODP 13 comportant la première ou la seconde amélioration et la troisième amélioration pour laquelle l'augmentation du temps de parcours des faisceaux optiques 20, 22, 106, 102, 11 dans la fibre aval 16 est égal à un tiers de la durée d'ouverture du MAO 1. La combinaison de ces deux améliorations permet d'annuler la majeure partie des surmodulations 23.

Selon un quatrième mode de réalisation de l'AODP 13 de l'état de l'art décrit ci-dessus, l'AODP 13 de l'état de l'art comprend le MAO 1 selon l'invention. Dans ce cas, les réflexions parasites 11 engendrées par la réflexion sur la face d'entrée 9, 91 du cristal 2 du MAO 1 du faisceau retour 22 provenant de l'AOFD 16 sont réduites de 40 à 45 dB ou de 50dB ou de 60dB ou plus.

En référence à la Figure 11, il est illustré la simulation des surmodulations 23 engendrées par un AODP 13 comportant la première amélioration et la quatrième amélioration. La combinaison de ces deux améliorations permet d'annuler la quasi-totalité des surmodulations 23.

Selon l'invention, les améliorations apportées à l'AODP 13 de l'état de l'art sont combinables entre elles. L'effet des améliorations est cumulatif. Dès lors, selon l'invention, l'AODP 13 de l'état de l'art comprend :
- une des améliorations parmi la première, la seconde, la troisième ou la quatrième amélioration, ou
- une combinaison quelconque des première et/ou seconde et/ou troisième et/ou quatrième améliorations, ou
- l'ensemble des améliorations.

Bien sûr, l'invention n'est pas limitée aux exemples qui viennent d'être décrits et de nombreux aménagements peuvent être apportés à ces exemples sans sortir du cadre de l'invention.

Ainsi, dans des variantes combinables entre elles des modes de réalisation précédemment décrits :
- la direction de propagation 81 forme un angle quelconque supérieur à 0° et/ou inférieur à 90° avec la direction 82 selon laquelle s'étend la droite d'intersection, et/ou
- le laser 18 est apte à émettre un faisceau laser 20 continu, et/ou
- le laser 18 est apte à émettre un faisceau laser 20 impulsionnel, et/ou
- lorsque le faisceau laser 20 émis par le laser 18 est un faisceau impulsionnel, l'unité de traitement est agencée et/ou configurée et/ou programmée pour commander le laser 18 et le MAO 1 de sorte que l'ouverture du MAO 1 coïncide avec l'émission de l'impulsion laser 20 émis par le laser 18.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Amplificateur optique fibré à double passage comprenant :
- un Modulateur Acousto-Optique (MAO),
- un laser apte à générer un faisceau optique,
- une fibre optique, dite fibre amont, s'étendant entre le laser et le MAO, dans laquelle est destiné à se propager un ou des faisceaux optiques à destination et/ou en provenance du MAO,
- un séparateur agencé pour connecter unilatéralement :
• une entrée du dispositif à une partie de la fibre amont reliant le séparateur au MAO de sorte qu'un faisceau optique émis par le laser, se propageant dans une partie de la fibre amont reliant le laser à l'entrée du dispositif optique, soit injecté par le séparateur dans la partie de la fibre amont reliant le séparateur au MAO en direction du MAO, et
• la partie de la fibre amont reliant le MAO au séparateur à une sortie du dispositif optique de sorte qu'un faisceau retour se propageant dans la fibre amont depuis le MAO vers le séparateur soit injecté par le séparateur vers la sortie du dispositif optique,
- une fibre optique, dite fibre aval, située en aval du MAO par rapport à une direction reliant la fibre amont au MAO, dans laquelle est destiné à se propager le ou les faisceaux optiques à destination et/ou en provenance du MAO,
- un moyen de réflexion, apte à modifier la polarisation d'un faisceau optique polarisé linéairement d'une valeur de 90°, connecté à la fibre aval du MAO et agencé pour réfléchir dans la fibre aval un faisceau provenant de la fibre aval ; l'amplificateur optique fibré à double passage dans lequel :
- la fibre amont est une fibre optique à maintien de polarisation apte à maintenir un état de polarisation linéaire d'un faisceau optique et la fibre aval est un amplificateur à fibre à pompage optique, ou
- la fibre aval est agencée de sorte qu'un temps de parcours du faisceau optique dans ladite fibre aval depuis le MAO jusqu'au moyen de réflexion soit non nul et inférieur ou égal à la moitié d'une durée d'ouverture du MAO, ou
- le MAO comprend un cristal dans lequel deux faces opposées, dites faces d'entrée/sortie, à travers lesquelles un ou des faisceaux optiques sont destinés à entrer et/ou sortir du cristal, forment un angle non nul entre elles ;
les faces d'entrée/sortie du MAO sont comprises dans un plan s'étendant depuis une face du cristal, dite face d'injection, en contact avec un oscillateur piézo-électrique apte à générer une onde acoustique se propageant dans le cristal jusqu'à une face du cristal, dite face d'absorption, sur laquelle est agencé un absorbeur acoustique apte à absorber, au moins en partie, l'onde acoustique après qu'elle se soit propagée dans le cristal depuis la face d'injection jusqu'à la face d'absorption.

2. Amplificateur optique fibré à double passage selon la revendication 1, dans lequel la fibre aval est une fibre optique à maintien de polarisation.

3. Amplificateur optique fibré à double passage selon la revendication 1 ou 2, comprenant une unité de traitement agencée et/ou configurée et/ou programmée pour commander le laser et/ou le modulateur acousto-optique et/ou des moyens de pompage associés à la fibre à pompage optique de sorte que le faisceau retour en sortie du dispositif optique soit un faisceau optique impulsionnel présentant :
- une fréquence supérieure à 100 Hz et/ou inférieure à 500 kHz, et/ou
- une puissance supérieure à 10 mW et/ou inférieure à 500 W, et/ou
- une largeur temporelle supérieure à 1 nanoseconde (ns) et/ou inférieure à 1 ms.

4. Amplificateur optique fibré à double passage selon l'une quelconque des revendications précédentes, dans lequel les faces d'entrée/sortie du cristal sont agencées de sorte qu'un angle nul soit formé entre :
- une direction du ou des faisceaux optiques destinés à entrer dans le cristal et/ou à sortir du cristal, après être sorti du cristal, par l'une des deux faces d'entrée/sortie, et
- une direction du ou des faisceaux optiques destinés à entrer dans le cristal et/ou à sortir du cristal, après être sorti du cristal, par l'autre des deux faces d'entrée/sortie.

5. Amplificateur optique fibré à double passage selon l'une quelconque des revendications précédentes, dans lequel la direction de propagation est parallèle à une droite, dite droite d'intersection, formée par une intersection entre les deux faces d'entrée/sortie du cristal.

6. Amplificateur optique fibré à double passage selon l'une quelconque des revendications 1 à 5, dans lequel les faces d'entrée/sortie du cristal sont parallèles entre elles et forment un angle non nul avec la direction de propagation.

7. Amplificateur optique fibré à double passage selon l'une quelconque des revendications précédentes, dans lequel un angle formé entre l'une des deux faces d'entrée/sortie du cristal et une direction du ou des faisceaux optiques destinés à entrer dans le cristal et/ou à sortir du cristal, après être sorti du cristal, par ladite une des deux faces d'entrée/sortie est différent d'un angle formé entre l'autre des deux faces d'entrée/sortie du cristal et une direction du ou des faisceaux optiques destinés à entrer dans le cristal et/ou à sortir du cristal, après être sorti du cristal, par ladite autre des deux faces d'entrée/sortie.

8. Amplificateur optique fibré à double passage selon l'une quelconque des revendications précédentes, dans lequel :
- la fibre amont est une fibre optique à maintien de polarisation apte à maintenir un état de polarisation linéaire d'un faisceau optique et la fibre aval est un amplificateur à fibre à pompage optique, et
- la fibre aval est agencée de sorte qu'un temps de parcours du faisceau optique dans ladite fibre aval depuis le MAO jusqu'au moyen de réflexion soit non nul et inférieur ou égal à la moitié d'une durée d'ouverture du MAO.

9. Amplificateur optique fibré à double passage selon l'une quelconque des revendications précédentes, dans lequel :
- la fibre amont est une fibre optique à maintien de polarisation apte à maintenir un état de polarisation linéaire d'un faisceau optique et la fibre aval est un amplificateur à fibre à pompage optique, et
- le MAO comprend un cristal dans lequel les deux faces d'entrée/sortie forment un angle non nul entre elles.

10. Amplificateur optique fibré à double passage selon l'une quelconque des revendications précédentes, dans lequel :
- la fibre aval est agencée de sorte qu'un temps de parcours du faisceau optique dans ladite fibre aval depuis le MAO jusqu'au moyen de réflexion soit non nul et inférieur ou égal à la moitié d'une durée d'ouverture du MAO, et
- le MAO comprend un cristal dans lequel les deux faces d'entrée/sortie forment un angle non nul entre elles.

## Patentansprüche

1. Optischer Doppelpass-Faserverstärker, umfassend:
- einen akustooptischen Modulator (AOM),
- einen Laser, der in der Lage ist, einen optischen Strahl zu erzeugen,
- eine optische Faser, die als Upstream-Faser bezeichnet wird und sich zwischen dem Laser und dem MAO erstreckt, in der sich ein oder mehrere optische Strahlen zum und/oder vom MAO ausbreiten sollen,
- einen Separator, der angeordnet ist zum einseitigen Verbinden von:
• einem Eingang der Vorrichtung an einem Abschnitt der Upstream-Faser, der den Separator mit dem MAO verbindet, sodass ein vom Laser emittierter optischer Strahl, der sich in einem Abschnitt der Upstream-Faser ausbreitet, der den Laser mit dem Eingang der optischen Vorrichtung verbindet, vom Separator in den Abschnitt der Upstream-Faser, der den Separator mit dem MAO verbindet, in Richtung des MAO eingekoppelt wird, und
• dem Abschnitt der Upstream-Faser, der den MAO mit dem Separator an einem Ausgang der optischen Vorrichtung verbindet, sodass ein Rückstrahl, der sich in der Upstream-Faser vom MAO zum Separator ausbreitet, vom Separator zum Ausgang der optischen Vorrichtung eingekoppelt wird,
- eine optische Faser, die als Downstream-Faser bezeichnet wird und dem MAO in Bezug auf eine Richtung nachgelagert ist, die die Upstream-Faser mit dem MAO verbindet, in der sich der oder die optische(n) Strahl(en) zum und/oder vom MAO ausbreiten sollen,
- eine Reflexionseinrichtung, die in der Lage ist, die Polarisation eines linear polarisierten optischen Strahls um einen Wert von 90° zu verändern, die mit der Downstream-Faser des MAO verbunden und so angeordnet ist, dass sie einen von der Downstream-Faser kommenden Strahl in die Downstream-Faser reflektiert; der optische Doppelpass-Faserverstärker, wobei:
- die Upstream-Faser eine polarisationserhaltende optische Faser ist, die in der Lage ist, einen linearen Polarisationszustand eines optischen Strahls aufrecht zu erhalten, und die Downstream-Faser ein optisch gepumpter Faserverstärker ist, oder
- die Downstream-Faser so angeordnet ist, dass eine Laufzeit des optischen Strahls in dieser Downstream-Faser vom MAO bis zur Reflexionseinrichtung ungleich Null und kleiner oder gleich der Hälfte einer Öffnungsdauer des MAO ist, oder
- der MAO einen Kristall umfasst, bei dem zwei einander gegenüberliegende Flächen, so genannte Eintritts-/Austrittsflächen, durch die ein oder mehrere optische Strahlen in den Kristall eintreten und/oder aus ihm austreten sollen, einen von Null verschiedenen Winkel zwischen sich bilden;
die Eintritts-/Austrittsflächen des MAO sich in einer Ebene befinden, die sich von einer Fläche des Kristalls, der so genannten Einkopplungsfläche, die mit einem piezoelektrischen Oszillator in Kontakt steht, der in der Lage ist, eine sich im Kristall ausbreitende akustische Welle zu erzeugen, bis zu einer Fläche des Kristalls, der so genannten Absorptionsfläche, erstreckt, auf der ein akustischer Absorber angeordnet ist, der in der Lage ist, die akustische Welle zumindest teilweise zu absorbieren, nachdem sie sich im Kristall von der Einkopplungsfläche bis zur Absorptionsfläche ausgebreitet hat.

2. Optischer Doppelpass-Faserverstärker nach Anspruch 1, wobei die Downstream-Faser eine polarisationserhaltende optische Faser ist.

3. Optischer Doppelpass-Faserverstärker nach Anspruch 1 oder 2, umfassend eine Verarbeitungseinheit, die dazu angeordnet und/oder konfiguriert und/oder programmiert ist, den Laser und/oder den akustooptischen Modulator und/oder die der optisch gepumpten Faser zugeordneten Pumpeinrichtungen so zu steuern, dass der Rückstrahl am Ausgang der optischen Vorrichtung ein gepulster optischer Strahl ist, der Folgendes aufweist:
- eine Frequenz größer als 100 Hz und/oder kleiner als 500 kHz und/oder
- eine Leistung von mehr als 10 mW und/oder weniger als 500 W und/oder
- eine Zeitdauer größer als 1 Nanosekunde (ns) und/oder kleiner als 1 ms.

4. Optischer Doppelpass-Faserverstärker nach einem der vorstehenden Ansprüche, wobei die Eintritts-/Austrittsflächen des Kristalls so angeordnet sind, dass ein Winkel von Null gebildet wird zwischen:
- einer Richtung des/der optischen Strahls/Strahlen, der/die in den Kristall eintritt/eintreten und/oder ihn nach dem Austritt aus dem Kristall durch eine der beiden Eintritts-/Austrittsflächen verlässt/verlassen, und
- einer Richtung des/der optischen Strahls/Strahlen, der/die in den Kristall eintritt/eintreten und/oder ihn nach dem Austritt aus dem Kristall durch die andere der beiden Eintritts-/Austrittsflächen verlässt/verlassen.

5. Optischer Doppelpass-Faserverstärker nach einem der vorstehenden Ansprüche, wobei die Ausbreitungsrichtung parallel zu einer Geraden, der so genannten Schnittgeraden, verläuft, die durch den Schnittpunkt der beiden Eintritts-/Austrittsflächen des Kristalls gebildet wird.

6. Optischer Doppelpass-Faserverstärker nach einem der Ansprüche 1 bis 5, wobei die Eintritts-/Austrittsflächen des Kristalls parallel zueinander sind und einen von Null verschiedenen Winkel mit der Ausbreitungsrichtung bilden.

7. Optischer Doppelpass-Faserverstärker nach einem der vorstehenden Ansprüche, wobei ein Winkel, der zwischen einer der beiden Eintritts-/Austrittsflächen des Kristalls und der Richtung des/der optischen Strahls/Strahlen, der/die in den Kristall eintritt/eintreten und/oder nach dem Austritt aus dem Kristall durch diese eine der beiden Eintritts-/Austrittsflächen austritt/austreten, gebildet wird, sich von dem Winkel, der zwischen der anderen der beiden Eintritts-/Austrittsflächen des Kristalls und der Richtung des/der optischen Strahls/Strahlen, der/die in den Kristall eintritt/eintreten und/oder nach dem Austritt aus dem Kristall durch diese andere der beiden Eintritts-/Austrittsflächen austritt/austreten, unterscheidet.

8. Optischer Doppelpass-Faserverstärker nach einem der vorstehenden Ansprüche, wobei:
- die Upstream-Faser eine polarisationserhaltende optische Faser ist, die in der Lage ist, einen linearen Polarisationszustand eines optischen Strahls aufrecht zu erhalten, und die Downstream-Faser ein optisch gepumpter Faserverstärker ist, und
- die Downstream-Faser so angeordnet ist, dass eine Laufzeit des optischen Strahls in der Downstream-Faser vom MAO bis zur Reflexionseinrichtung ungleich Null und kleiner oder gleich der Hälfte einer Öffnungsdauer des MAO ist.

9. Optischer Doppelpass-Faserverstärker nach einem der vorstehenden Ansprüche, wobei:
- die Upstream-Faser eine polarisationserhaltende optische Faser ist, die in der Lage ist, einen linearen Polarisationszustand eines optischen Strahls aufrecht zu erhalten, und die Downstream-Faser ein optisch gepumpter Faserverstärker ist, und
- der MAO einen Kristall umfasst, wobei die beiden Eintritts-/Austrittsflächen einen Winkel ungleich Null zwischen sich bilden.

10. Optischer Doppelpass-Faserverstärker nach einem der vorstehenden Ansprüche, wobei:
- die Downstream-Faser so angeordnet ist, dass eine Laufzeit des optischen Strahls in dieser Downstream-Faser vom MAO zur Reflexionseinrichtung ungleich Null und kleiner oder gleich der Hälfte einer Öffnungsdauer des MAO ist, und
- der MAO einen Kristall umfasst, wobei die beiden Eintritts-/Austrittsflächen einen Winkel ungleich Null zwischen sich bilden.

## Claims

1. Double-pass optical fibre amplifier comprising:
- an acousto-optic modulator (AOM),
- a laser capable of generating an optical beam,
- an optical fibre, called upstream fibre, extending between the laser and the AOM, in which one or more optical beams is or are intended to propagate towards and/or originating from the AOM,
- a splitter arranged to unilaterally connect:
• an input of the device to a portion of the upstream fibre linking the splitter to the AOM so that an optical beam emitted by the laser, propagating in a portion of the upstream fibre linking the laser to the input of the optical device, is injected by the splitter in the portion of the upstream fibre linking the splitter to the AOM in the direction of the AOM, and
• the portion of the upstream fibre linking the AOM to the splitter at an output of the optical device so that a return beam propagating in the upstream fibre from the AOM towards the splitter is injected by the splitter towards the output of the optical device,
- an optical fibre, called downstream fibre, situated downstream of the AOM with respect to a direction linking the upstream fibre to the AOM, in which the optical beam(s) is/are intended to propagate towards and/or originating from the AOM,
- a reflection means, capable of modifying the polarization of an optical beam polarized linearly by a value of 90°, connected to the downstream fibre of the AOM and arranged to reflect a beam originating from the downstream fibre into the downstream fibre;
the double-pass optical fibre amplifier in which:
- the upstream fibre is a polarization-maintaining optical fibre capable of maintaining a linear polarization state of an optical beam and the downstream fibre is a pumped optical fibre amplifier, or
- the downstream fibre is arranged so that a transit time of the optical beam in said downstream fibre from the AOM up to the reflection means is non-zero and less than or equal to half of an open time of the AOM, or
- the AOM comprises a crystal in which two opposite faces, called input/output faces, through which one or more optical beams is or are intended to enter and/or exit the crystal, form a non-zero angle with one another; the input/output faces of the AOM are comprised in a plane extending from a face of the crystal, called injection face, in contact with a piezoelectric oscillator capable of generating an acoustic wave propagating in the crystal up to a face of the crystal, called absorption face, on which an acoustic absorber capable of at least partly absorbing the acoustic wave after it has propagated in the crystal from the injection face up to the absorption face is arranged.

2. Double-pass optical fibre amplifier according to claim 1, in which the downstream fibre is a polarization-maintaining optical fibre.

3. Double-pass optical fibre amplifier according to claim 1 or 2, comprising a processing unit arranged and/or configured and/or programmed to control the laser and/or the acousto-optic modulator and/or pumping means associated with the pumped optical fibre so that the return beam at the output of the optical device is a pulsed optical beam having:
- a frequency greater than 100 Hz and/or less than 500 kHz, and/or
- a power greater than 10 mW and/or less than 500 W, and/or
- a temporal width greater than 1 nanosecond (ns) and/or less than 1 ms.

4. Double-pass optical fibre amplifier according to any one of the preceding claims, in which the input/output faces of the crystal are arranged so that a zero angle is formed between:
- a direction of the optical beam(s) intended to enter the crystal and/or exit the crystal, after having exited the crystal, by one of the two input/output faces, and
- a direction of the optical beam(s) intended to enter the crystal and/or exit the crystal, after having exited the crystal, by the other of the two input/output faces.

5. Double-pass optical fibre amplifier according to any one of the preceding claims, in which the direction of propagation is parallel to a line, called straight line of intersection, formed by an intersection between the two input/output faces of the crystal.

6. Double-pass optical fibre amplifier according to any one of claims 1 to 5, in which the input/output faces of the crystal are parallel to one another and form a non-zero angle with the direction of propagation.

7. Double-pass optical fibre amplifier according to any one of the preceding claims, in which an angle formed between one of the two input/output faces of the crystal and a direction of the optical beam(s) intended to enter the crystal and/or exit the crystal, after having exited the crystal, by said one of the two input/output faces is different from an angle formed between the other of the two input/output faces of the crystal and a direction of the optical beam(s) intended to enter the crystal and/or exit the crystal, after having exited the crystal, by said other of the two input/output faces.

8. Double-pass optical fibre amplifier according to any one of the preceding claims, in which:
- the upstream fibre is a polarization-maintaining optical fibre capable of maintaining a linear polarization state of an optical beam and the downstream fibre is a pumped optical fibre amplifier, and
- the downstream fibre is arranged so that a transit time of the optical beam in said downstream fibre from the AOM up to the reflection means is non-zero and less than or equal to half of an open time of the AOM.

9. Double-pass optical fibre amplifier according to any one of the preceding claims, in which:
- the upstream fibre is a polarization-maintaining optical fibre capable of maintaining a linear polarization state of an optical beam and the downstream fibre is a pumped optical fibre amplifier, and
- the AOM comprises a crystal in which the two input/output faces form a non-zero angle with one another.

10. Double-pass optical fibre amplifier according to any one of the preceding claims, in which:
- the downstream fibre is arranged so that a transit time of the optical beam in said downstream fibre from the AOM up to the reflection means is non-zero and less than or equal to half of an open time of the AOM, and
- the AOM comprises a crystal in which the two input/output faces form a non-zero angle with one another.
